Europäisches Patentamt

European Patent Office

Office européen des brevets

(19)

(11) Publication number: **0 027 474**
**B1**

(12) **EUROPEAN PATENT SPECIFICATION**

(45) Date of publication of patent specification: **12.08.87**

(51) Int. Cl.⁴: **C 08 F 10/00, C 08 F 2/00**

(21) Application number: **80900786.7**

(22) Date of filing: **23.04.80**

(86) International application number:
**PCT/JP80/00085**

(87) International publication number:
**WO 80/02288 30.10.80 Gazette 80/25**

(54) PROCESS FOR PRODUCING POLYOLEFIN.

(30) Priority: **23.04.79 JP 48964/79**

(43) Date of publication of application:
**29.04.81 Bulletin 81/17**

(45) Publication of the grant of the patent:
**12.08.87 Bulletin 87/33**

(84) Designated Contracting States:
**AT DE FR GB NL**

(56) References cited:
**JP-A-48 880 688**
**JP-B-46 029 485**
**JP-B-47 001 371**
**US-A-3 356 667**
**US-A-3 998 995**

The file contains technical information
submitted after the application was filed and
not included in this specification

(73) Proprietor: **MITSUI PETROCHEMICAL
INDUSTRIES, LTD.**
**2-5, Kasumigaseki 3-chome Chiyoda-ku
Tokyo 100 (JP)**

(72) Inventor: **MORI, Ado**
**2, Yushudai Higashi 3-chome
Ichihara-shi Chiba 229-01 (JP)**

(74) Representative: **Moll, Walter, Dipl.-Phys., Dr.
et al
Patentanwälte Glawe, Delfs, Moll & Partner
Liebherrstrasse 20 Postfach 162
D-8000 München 26 (DE)**

Courier Press, Leamington Spa, England.

## Description

### Technical field

The present invention relates to a process for preparing polyolefins having predetermined properties in the presence of a Ziegler catalyst. More particularly, it relates to a process for preparing polyolefins having predetermined properties by detecting parameters involved in the properties by a gas chromatography, then by operating and controlling the detected signals with a computer.

### Background art

In industrial preparation of polyolefins, it is generally desirable to perform the reaction in a reactor kept at a determined temperature and at a constant production rate by way of a continuous process in order to obtain polyolefins having predetermined standard or properties. In the preparation of polyolefins that is performed in the presence of a Ziegler catalyst, there are lots of properties for the produced polyolefins to be controlled. Of these properties, the melt index and the density are most important factors. The melt index and the density of polyolefins take part in the guidance for the average molecular weight and are optionally set up, depending on the purpose to be used. These indexes enable consumers to choose brands of polyolefins properly.

The melt index is usually measured at 190°C for polyethylenes and at 230°C for polypropylenes, according to the method ASTM D1238. The polymerization rate of polyolefins is proportional to each of concentrations of catalyst and monomer, independently, once the polymerization temperature and the catalyst are determined. In the polymerization in which a Ziegler catalyst is used, the melt index of resulting polyolefin is controlled by hydrogen as a chain transfer agent. Thus, the melt index of resulting polyolefin is determined by the concentration ratio or hydrogen to olefin (other factors, including species of catalyst, temperature, volume and shape of the reactor give influence upon the melt index). In the meantime, the density of polyolefin is measured according to the method ASTM D1505-67. The density of polyolefin is usually determined by factors, including species of catalyst, temperature, volume of the reactor, amount of comonomer, and the like. Control of the density is usually performed by controlling the molar ratio of olefin and comonomer. Increase in the amount of comonomer generally results in decrease of the density. For the reasons mentioned above, preparation of polyolefins is generally carried out in a continuous process by feeding predetermined amounts of catalyst, olefin and hydrogen to a reactor kept at a predetermined temperature to produce a polyolefin having predetermined properties or standard. Although it is required to feed predetermined amounts of catalyst, olefin and hydrogen to the reactor in order to maintain the reaction system under predetermined conditions, it is difficult to maintain the conditions only by keeping the feed of the reactants at the predetermined amounts. For example, subtle variation or decrease in the activity of catalyst in the polymerization reaction brings about increase in the olefin concentration in the reactor, thus resulting in decrease of the melt index of the produced polyolefin. There are many indefinable factors that give influence upon the properties of product, as described above. Variation of the melt index of resulting polyolefin is sensitive to variation of concentration ratio of olefin to hydrogen. In industrial processes for preparing polyethylenes, for example, the relationship between the change in the melt index (M.I.) and the change in the partial pressure ratio of gas phase is approximately as shown below, always depending on polymerization conditions such as species of Ziegler catalyst, temperature, and the like.

$$\frac{\dfrac{\Delta MI}{MI}}{\dfrac{\Delta(H_2/C_2)}{(H_2/C_2)}}=3\sim4$$

In the case of polyethylene, a polyethylene produced will be discarded for the reason of below standard, if it has the melt index of above ±10% range out of the predetermined value. Therefore, $\Delta(H_2/C_2)$ needs to be maintained within ±3% in order to avoid the loss of production. In prior art processes, the control of the melt index has been carried out by the method in which volumes of ethylene and hydrogen are controlled by means of an operation of respective feed valves in response to the melt index measured. However, this method involves such a grave difficulty as delay in the response due to the fact that it takes approximately an hour to accomplish the measurement of the melt index. Therefore, a solution to this problem is proposed by a method to monitor the inside of the reactor directly, that is, to determine the concentrations of olefin and hydrogen of the liquid phase in the reactor. However, the method is not preferable for the following reasons:

1. The liquid phase to be measured must be separated from the reaction mixture or slurry composed of liquid and solid (US—A—3 356 667, 3 817 962).

Under such measurement conditions, it is difficult to obtain the absolute values of olefin and hydrogen concentrations because splash of the components to be measured tends to happen from liquid phase.

2. A sampling line must be provided with to collect samples from the reactor. Under such sampling conditions, it is difficult to know the exact reaction conditions in the reactor because polymerization occurs before sampling is accomplished (US—A—3,835,106).

In prior art processes for preparing polyethylenes, control of the density has been also carried out by the method in which the feed volumes of ethylene and comonomer are controlled by means of an operation of respective valves in response to the density measured of the formed polyethylene. However, the method also involves such a grave difficulty as delay in the response due to the fact that it takes approximately an hour to accomplish the measurement of the density. For the solution of this problem, a method to monitor the inside of the reactor directly is also proposed. The method, however, is not preferable for same reasons as described above in the case of the melt index. Another prior art discloses monitoring inside of the reaction and measuring the pressure in the reactor in order to control the properties of the final product or the ethylene copolymer having a uniform quality (US—A—3,691,142). However, there has not yet been known any preferable art to produce polyolefins having desired properties, in particular, the desired melt index and/or density.

It is, therefore, an object of the invention to provide a process for preparing polyolefins having extremely uniform predetermined properties in the presence of a Ziegler catalyst and hydrogen by polymerizing olefin, which comprises measuring the gas phase components set up in the reactor by which to exclude completely the disadvantages involved in the measurements of the liquid phase as mentioned above.

It is another object of the invention to provide a process for preparing polyolefins having extremely uniform predetermined melt index in the presence of a Ziegler catalyst and hydrogen by polymerizing olefin, which comprises measuring the gas phase components set up in the reactor.

It is still another object of the invention to provide a process for preparing polyolefins having extremely uniform predetermined density in the presence of a Zieger catalyst and hydrogen by polymerizing olefin, which comprises measuring the gas phase components set up in the reactor.

Disclosure of invention

Accordingly, the invention provides a process for preparing polyolefins having predetermined properties by polymerizing olefin in the presence of a Ziegler catalyst and hydrogen. At least two parameters relating to the concentrations of one or more olefin monomers and of hydrogen in the reactor are detected by gas chromatography. The signals responsive to the parameters detected by gas chromatography are applied to a computer which compares the signals with the preset values and emits new signals as the function of the deviation from the preset values to control hydrogen and olefin feed volumes and/or the amount of catalyst into the reaction and the pressure inside the reactor, thereby controlling the amounts of the olefin and/or hydrogen, thus resulting in the preparation of polyolefins having the predetermined properties. In this manner, when prompt response is made to the data of olefin and hydrogen concentration measurements in gas phase of the reactor detected by high-speed gas chromatography, for example, at intervals of one minute, no huntings of the properties are substantially brought about in the resulting polyolefin. It is difficult, however, to control olefin and hydrogen feed volumes into the reactor and pressure in the reactor by means of manual operation according to the measurement data detected by high-speed gas chromatography (even if the measurement is preformed by high-speed gas chromatography at intervals of one minute, the slow response caused by the manual operation results in the huntings of properties of the resulting polymer). Therefore, in the method of the present invention, control of the feed volumes into the reactor and the pressure in it is achieved by means of an automatic control through employment of a computer. In the process for the preparation of polyolefins having predetermined melt index in the presence of a Ziegler catalyst and hydrogen, the parameters relating to the concentrations of olefin and hydrogen in the reactor are also detected by gas chromatography. The signals responsive to the parameters detected by gas chromatography are applied to the computer which compares the signals with the preset values relating to the predetermined melt index in the computer and emits new signals as the function of the deviation from the present values to control the hydrogen feed volume into the reactor, the pressure in the reactor, and optionally the amount of catalyst feed, thereby controlling the concentrations of olefins and hydrogen, thus resulting in the preparation of polyolefin having the predetermined melt index.

Further, in the process for preparing polyolefins, according to the invention, having the predetermined density, by polymerizing not less than two olefin monomers in the presence of a Ziegler catalyst and hydrogen, the parameters relating to the concentrations of the olefin monomers are detected by gas chromatography. The signals responsive to the paramters detected by gas chromatography are applied to the computer which compares the signals with the preset values relating to the predetermined density and emits new signals as the function of the deviation from the preset values to control the olefin feed volumes into the reactor, thereby controlling the concentrations of olefins, thus resulting in the preparation of polyolefins having the predetermined density.

In the method of the invention, the concentrations of olefin and hydrogen are detected by gas chromatography in the gas phase set up in the reactor. The reactor temperature is kept constant and the concentrations of olefin and/or hydrogen are controlled to produce, at the temperature, polyolefins having predetermined properties, such as melt index and/or density. A gas chromatography to be used is so regulated that the time required to detect the olefin is 10 minutes or below, preferably from five seconds to one minute. In the present invention, olefins means α-olefins such as ethylene, propylene, 1-butene or 4-methyl-1-pentene, preferably those having from 2 to 6 carbon atoms. In the present invention, polyolefins means homopolymers, copolymers of the above-mentioned α-olefins or copolymers of at least one olefin mentioned above and a diolefin. In the present invention, monomers means olefins of major fraction of all olefins in the polymerization system, whereas comonomers mean olefins of minor fraction except for the above-defined monomers and/or diolefins. In the process of copolymerization of monomer with comonomer for the preparation of a polyolefin, the ratio of comonomer to the monomer should be not more than 30 mole %, preferably not more than 10 mole %.

Examples of diolefins are conjugated diolefins such as butadiene, propylene or isoprene and non-conjugated diolefins such as dicyclopentadiene or ethylidenenorbornene.

Especially preferred olefins are ethylene, and mixtures of ethylene and not more than 30 mole %, preferably not more than 10 mole % of other olefin or diolefin to ethylene.

The Ziegler catalysts to be used in the preparation of polyolefins according to the invention comprise generally two major components: (a) compound of a transition metal belonging to Group IV to VI in the Mendelejeff's periodic table, and (b) an organometallic compound or hydride of a metal belonging to Group I to III in the periodic table. Especially preferred are those that comprise as the major constituent a titanium or vanadium halide, and an organoaluminum compound. The components (a) and (b) may be supported on a carrier or may be denatured with a denaturing agent such as electron donor. As the Ziegler catalysts in the present invention, there may be employed those disclosed, for example, in U.S.—A—Nos. 3,257,332; 3,826,792; 3,113,115; 3,546,133; 4,125,698; 4,071,672; 4,071,674; 3,642,746; 3,051,690 and 3,058,963, and GB—A—1,140,649.

In the polymerization of olefin, the quantities of (a) and (b) components in the catalyst to be used will be determined as follows: the quantity of (a) component being 0.001 to 100 m mole per liter of solvent, based on the titanium, and the quantity of (b) component composed of an organometallic compound or hydride of a metal belonging to Group I to III being 0.1 to 1,000 molar times, preferably 0.2 to 100 molar times of (a) component.

The polymerization reaction according to the invention with the catalyst may be performed in a similar manner as in the conventional polymerization of olefins with a Ziegler catalyst. Thus, polymerization reaction is performed substantially in the absence of oxygen and water. The polymerization reaction is performed in aliphatic hydrocarbons as an inert solvent, e.g. hexane, heptane or kerosene, into which a catalyst, an olefin and, if necessary, a diolefin are fed to effect the polymerization. The polymerization reaction is normally performed at a temperature of from 20 to 200°C, preferably at 50 to 180°C. The polymerization reaction is preferably performed under application of pressure, generally at pressure of from 2 to 100 (kg/cm²) bar. Further embodiments of the process of the invention appear from the claims.

Brief description of drawings

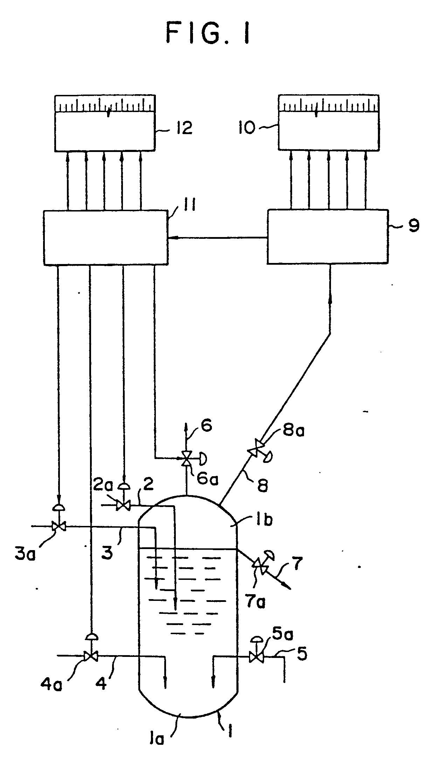

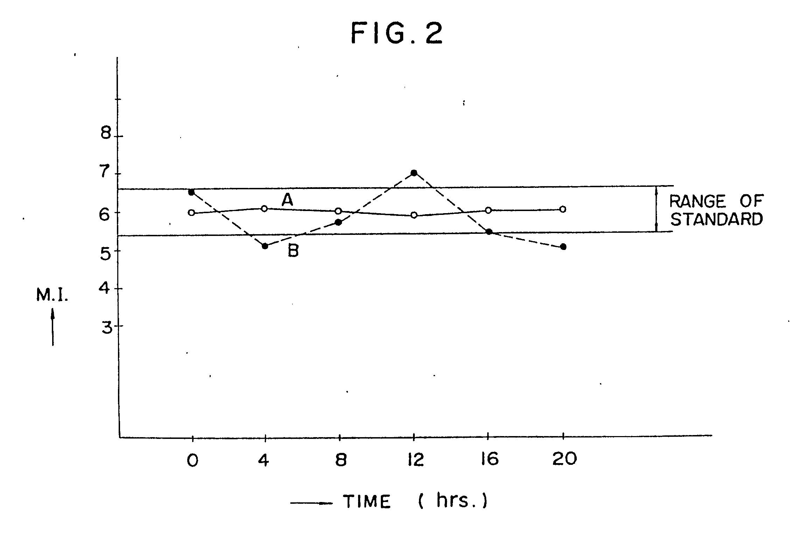

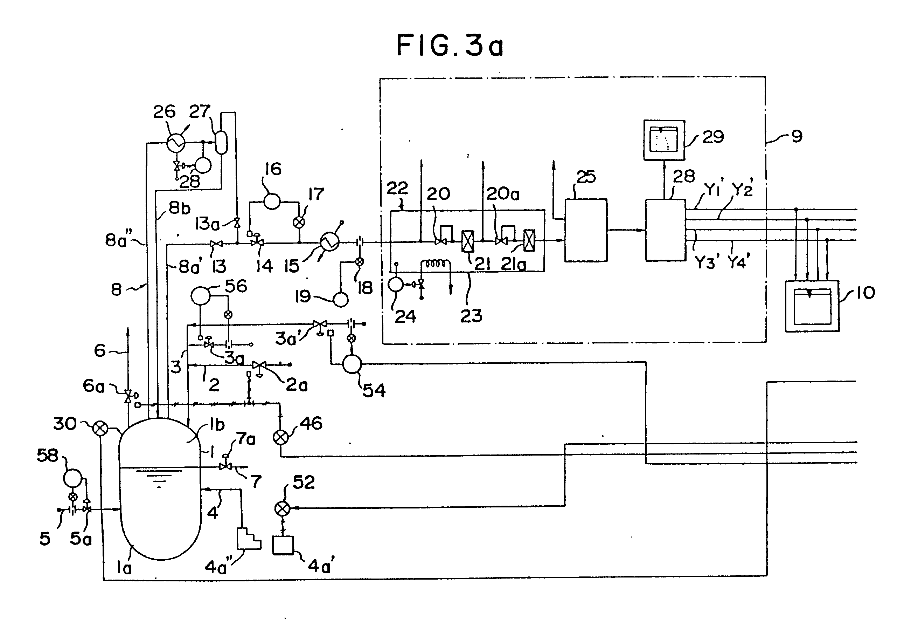

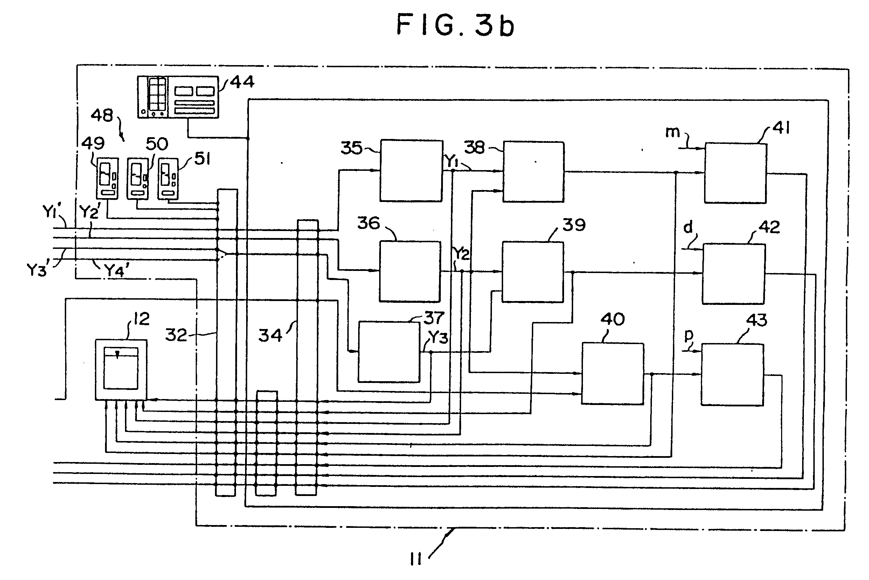

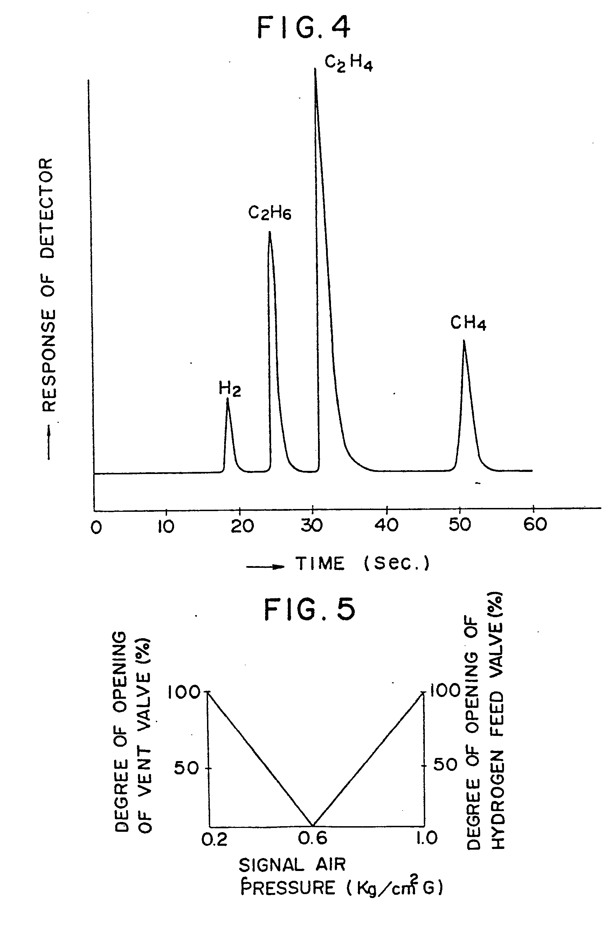

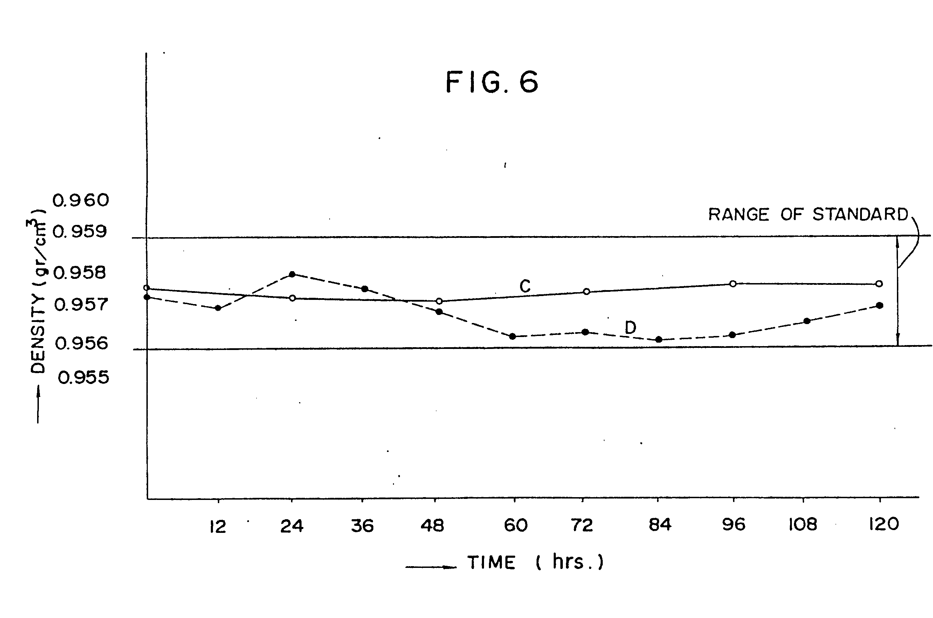

Figure 1 illustrates a block diagram of an embodiment of the present invention. Figure 2 illustrates the relationship between the polymerization period and the melt index of the resulting polyolefin. Figures 3a and 3b illustrate a block diagram of an embodiment of the control system in the present invention. Figure 4 illustrates responses of the detector of gas chromatography in the controller. Figure 5 illustrates a controlling system of hydrogen feed valve and vent valve (pressure release valve) in the controller. Figure 6 illustrates the relationship between the polymerization period and the density of the resulting polyolefin.

Best mode for carrying out the invention

Figure 1 illustrates a block diagram of an embodiment of the present invention to prepare polyolefins, wherein the reactor 1 kept at a constant temperature is equipped with a liquid phase part 1a and a gas phase part 1b. The reactor 1 is equipped with the lines 2, 3, 4 and 5 for feeding hydrogen, olefin, catalyst and solvent into the reactor, respectively, as well as the line 6 for releasing pressure in the reactor and the line 7 for taking out the resulting polyolefin from the reactor, respectively. Further, the feed lines 2, 3, 4 and 5 are equipped with control valves 2a, 3a, 4a and 5a to control the feed volumes, respectively. Also, the vent line 6 and the outlet line 7 are equipped with the vent valve 6a and the switch valve 7a, respectively. Among these valves, the degree of opening of the valves 2a, 3a, 6a and, in some cases 4a too, is controlled in response to the control signals from the computer which will be described hereunder in order to control the concentrations of hydrogen and olefin to produce polyolefins having the predetermined melt index. The gas phase part 1b of the reactor 1 is equipped with the sampling line 8. The hydrogen and olefin in 1b are introduced through the switch valve 8a into the gas chromatography 9 to measure their concentrations. The gas chromatography to be used should be a high-speed gas chromatography that suffices conditions under which the time required for the detection of olefin (i.e. retention time) is shorter than the residence time of the product in the reactor (the retention time would be not more than 10 minutes, preferably from five seconds to one minute).

The electric signals responsive to the concentrations of hydrogen and olefin detected by the gas chromatography 9 are applied to the computer 11. The computer 11 comprises a program to determine the polymerization conditions under which polyolefins having the predetermined melt index are produced. The computer 11 carrys out operation according to the changes in the signals and emits new signals to control the hydrogen feed valve 2a, vent valve 6a, olefin feed valve 3a and, in some cases catalyst feed valve 4a too, whereby the concentrations of olefin and hydrogen are controlled so as to produce polyolefins having the predetermined melt index.

In this case, the data from gas chromatography 9 and the control signals emitted from the computer 11 are recorded on the recorders 10 and 12, respectively.

Figures 3a—3b illustrate preferred embodiments of the control system in order to perform the process according to the invention. Some elements in Figures 3a—3b that are identical with those in Figure 1 are represented by the corresponding referential signs. In summary, the present invention is to provide a process for preparing polyolefins having the predetermined properties, wherein hydrogen and olefin are sampled through the sample line 8 from the gas phase 1b in the reactor 1; the sampled gases are detected by the process gas chromatography 9; the signals responsive to the concentrations are applied to the computer 11; the hydrogen feed valve 2a, vent valve 6a and the olefin feed valve 3a are manipulated by the operation control output of the computer 11 finally to control the concentrations of hydrogen and olefin in the reactor.

At first, the sampling line 8 will be explained as follows.

As illustrated in Figure 3a, the sampling line 8 is equipped with the dual sampling lines 8a' and 8a''. The sampling line 8a' is basically used to measure directly the gases in the gas phase 1b of the reactor. In the line 8a', the sample gas is passed through the block valve 13 which is used for shifting the sampling line to the sampling line 8a'', flushed by means of the pressure control valve 14 which reduces the sample gas pressure to the predetermined value, and then vaporized completely with the sample vaporizer 15. The sign 16 illustrated in Figure 3a is PID controller to control the control valve 14 by means of PID (proportional-plus-integral-plus-derivative) control, responsive to the sample pressure detected by the transmitter 17. The flow amount of sample gas in the line is observed by means of the flow amount indicator 19 through the flow amount transmitter 18 like orifice meter, if the flow amount is maintained within the standardized range or not. Then, the sample gas is pretreated by means of the sample pretreatment unit 22 which is composed of the vent valves 20 and 20a, and the filters 21 and 21a, in two steps, and regulated so as to fit for the operation conditions of the process gas chromatography 9. The sample pretreatment unit 22 is placed in the thermostat 23 to prevent condensation of the sample gas and the thermostat 23 is kept at a certain temperature between 40 and 150°C by means of the thermocontroller 24. Thus, by using the sample line 8a', dry sample gas may always be injected into the detector 25 of the process gas chromatography 9, even in the operation in which a monomer having a boiling point comparable with that of a solvent is used. In some cases, monomers having significant difference in boiling point compared with that of solvent are solely used to produce polyolefins of certain standard or brand.

In such cases, certain and stable measurement of the sample gas by the process gas chromatography may be constantly carried out by operating the sample line 8a'' equipped prior to the pressure control valve 14. Thus, in the sample line 8a'', the solvent in the sample gas sampled from the gas phase 1b in the reactor 1 is condensed and separated by means of the sample condenser 26 and the sample receiver 27. The sample temperature at the outlet of the sample condenser 26 is automatically controlled by the thermocontroller 28 at a certain temperature between −15 and 10°C. Thus, the sample gas from the sample receiver 27 may be completely vaporized by heating it with the vaporizer 15 after flushing it through the pressure control valve 14. In this case, the separated solvent is returned into the reactor 1 through the line 8b. Further, selection of the sampling lines, either 8a' or 8a'', may be undertaken by operating the block valve 13a equipped prior to the sampling line 8a' in conjunction with the block valve 13. Employment of the sampling system brings about an advantage that normal operation of the process gas chromatography is maintained without paying much attention to the sampling conditions. In this case, the component of gas phase in the reactor is, however, different from that of the sample gas. In the embodiment of the present invention wherein the temperatures of the reactor and of the outlet of the sample condenser 26 are controlled independently, the gas component in the reactor may readily be estimated from the data of the sample gas by means of a simple precalculation of the gas-liquid equilibrium. Thus, in the embodiment of the present invention, the sample gas is completely vaporized before it is introduced into the process gas chromatography. Therefore, the sampling system of the present invention may exclude completely such troubles involved in conventional systems that liquid flow of components having high boiling point into sampling line or condensation thereof therein, which brings about involvement of liquid particles of sample gas in gas chromatography, results in the variation of indication of gas chromatography or inoperation thereof due to packing in the line. The fact also means the improvement in the stability of operating gas chromatography and consequently enablement of accurate meaurement of gas concentrations of gas phase in the reactor. In addition, in the embodiment of the present invention, conversion between the sampling lines 8a' and 8a'' according to the standard of olefins to be prepared enables wide varieties of operations using different monomers, depending on the standard.

In summary, the sampling system used in the embodiment of the present invention suffices the both requrements for the gas chromatography to detect the gas concentrations and for the preparation process to produce polyolefins according to the predetermined standard, at the same time.

Next, the detector 25 of the process gas chromatography 9 will be explained taking polymerization of ethylene as an example. The sample gas adjusted to detectable conditions with the gas chromatorgraphy through employment of the sample pretreatment unit 22 is introduced into a separation column of the detector 25. Then, each component of the sample gas is detected by a thermal contact detector composed of a resistance bridge. Each output signal generated from the detector shows a response as shown in Figure 4. In the case where ethylene is used as the monomer, the normal order in the response time is inherently hydrogen $(H_2)$, methane $(CH_4)$, ethane $(C_2H_6)$ and ethylene $(C_2H_4)$. However, in the detection system of the present invention, the response time of ethane and ethylene may be put between hydrogen and methane, as shown in Figure 4, by having ethane and ethylene bypassed into columns of shorter response time, using three columns connected in series and parallel. By doing so, the detection time may be shortened.

The output signals generated from the detector are applied to the controller 28. Since each output signal, for example, that corresponding to hydrogen $(H_2)$ or ethylene $(C_2H_4)$ as shown in Figure 4, is generated from the detector at intervals of a certain fixed period depending on the inherent character of the detector 25, the peak value of each signal corresponding to each gas component may be measured at the respective response time in the controller 28 and taken out as the d.c. voltage signal. The peak value of each component represents the parameter of each gas concentration the d.c. voltage signals are converted into the d.c. voltage within 1—5 V according to the magnitude of the peak value, and taken at as signals Y1' and Y2', respectively.

In a continous process for the preparation of polyolefins, measurement of the components in the reactor by gas chromatogrphy 9 should be carried out in short periodic time, as described above. It is desirable that the periodic time is within 10 minutes, preferably from five seconds to three minutes.

In the embodiment of the present invention, Yamatake-Honewell H-1000TE by Yamatake-Honewell Co., Tokyo, Japan is employed for the gas chromatography. The Model H-1000TE used in the present invention can be operated in periodic time within two minutes and, in practice, can be automatically operated at intervals of 60 seconds, as shown in Figure 4.

Consequently, the signals generated from the detector 25 at intervals of measurement time as shown in Figure 4 are transmitted to the controller 28, wherein the received signals are separated into each component to measure each peak value and converted into each d.c. voltage signal within 1—5 V according to the magnitude of each peak value.

The signals are held at intervals of measurement time and output successively. When the Model H-1000TE is used, hydrogen $(H_2)$, monomer-A, monomer-B and monomer-C, for instance, in a certain sample gas may be measured and the resulting d.c. voltage signals may be represented successively as $Y_1'$, $Y_2'$, $Y_3'$ and $Y_4'$. As described above, by separating the signals generated from the detector 25 into those of respective components and taking out new signals successively after the holding thereof, complex treatment in the computer of the signals generated from the detector need not be carried out and, consequently, the simplicity of system, cost down and improvement in the whole reliability may be attained. The signals separated into those of respective components in the controller 28 are recorded on the recorder 29. The d.c. voltage signals $Y_1'$—$Y_4'$ are applied to the computer 11 (Figure 3b) and, simultaneously, recorded on the multipoint recorder 10. The process computer controller system will be explained hereinafter by referring to Figure 3b.

The successive d.c. voltage signals $Y_1'$, $Y_2'$, $Y_3'$ and $Y_4'$ (each 1—5 V) corresponding to $H_2$, monomer-A, monomer-B and monomer-C respectively taken out from the gas chromatography 9 and the voltage signal (1—5 V) generated from the pressure transmitter 30 of the reactor 1 are connected to the input terminal 32 of the computer 11. The computer 11 comprises the scanning plot (not illustrated) for scanning five kinds of the signals noted above automatically and periodically, the A/D (analog/digital) converting plot 34, the linearizing plots 35, 36 and 37 for linearizing the signals generated from the converter, the operating plots 38, 39 and 40 for operating the signals, and the controlling plots 41, 42 and 43 for controlling the signals generated from the operating plots in comparison with the standard values pre-established. In the embodiment, Yamatake-Honewell TDCS-2000 by Yamatake-Honewell Co., Tokyo, Japan is used as the computer 11.

The method for controlling of properties of polyolefins by using the process computer control system will be explained concretely hereinafter.

First, the control loop for controlling the melt index (M.I.) of polyolefins will be explained in detail regarding, for example, polymerization of ethylene. As mentioned above, the M.I. value of polymers is fundamentally a function of molar ratio of hydrogen to monomer-A in the gas phase 1b of the reactor 1. In the process for preparing polyethylene from hydrogen $(H_2)$ and ethylene as monomer-A, the control loop for controlling the molar ratio of hydrogen $(H_2)$ to ethylene $(C_2H_4)$ (represented as $H_2/C_2$ in hereinafter description) for preparing polyethylene having the predetermined M.I. is described below. The signals $Y_1'$ and $Y_2'$ A/D converted by the converter 34, representing H₂ mole % and C₂ mole %, respectively, are applied to the linearizing plots 35 and 36, respectively. As output signals generated from the gas chromatography 9 correspond to each peak height shown in Figure 4, they are calibrated into respective correct mole % concentrations by means of linearization in the linearizing plots 35 and 36, respectively.

When the integration of the signals is carried out in the controller 28 of the gas chromatography 9, the mole % concentration may be measured accurately. In such a case, it is unnecessary to linearize the signals in the computer.

The linearization of signals in the linearizing plots 35 and 36 may be carried out by way of folded-line approximated operation. The output signals $Y_1$ and $Y_2$ generated from the linearizing plots 35 and 36 indicate exactly the mole % concentrations of hydrogen (H₂) and ethylene (C₂H₄), respectively. The signals $Y_1$ and $Y_2$ are again converted into the analog signals by the D/A converter 34, and the resulting voltage signals (1—5 V) are recorded on the multipoint recorder 12 and simultaneously applied to the operating plot 38.

In the operating plot 38, $Y_1/Y_2$ operation is performed and the resulting $Y_1/Y_2$ output is recorded on the multipoint recorder 12 as the $H_2/C_2$ value through the D/A converter 34 and simultaneously applied to the PID controller 41 as the process variable. In the PID controller 41, the preestablished value $m$ corresponding to the predetermined melt index has been previously set up by means of the operation of the data entry panel 44 by an operator. In the PID controller 41, the input signal ($H_2/C_2$ value) is compared with the pre-established value $m$, and the both are PID controlled automatically for coincidence or agreement. In accordance with the difference between the both values, 4—20 mA current signal is taken out. The current signal is converted into the air pressure signal within 0.2—1.0 kg/cm²G with the current/air pressure converter 46 according to the magnitude of the value, and the resulting pressure signal is supplied to the positioners of the hydrogen feed valve 2a and the vent valve 6a. Control of the positioners of the valves 2a and 6a is carried out by means of a so-called split range method.

Namely, as illustrated in Figure 5, the valve positioner of the vent valve 6a is regulated in such manner that it is completely opened at the input air signal pressure of 0.2 kg/cm²G or below, and completely closed at the pressure of 0.6 kg/cm²G or above, and further the hydrogen feed valve 2a is regulated in such manner that it is completely closed at the pressure of 0.6 kg/cm²G or below and completely opened at 1.0 kg/cm²G or above. Thus, control of the two valves may be carried out by the single control signal pressure.

The input of the standard $H_2/C_2$ value preestablished into the computer 11 may be carried out by using the data entry panel 44. Alternatively, it may be carried out by using the $H_2/C_2$ analog indicator 49 of the analog display apparatus 48. The indicator 49 also indicates the agreement or difference of the $H_2/C_2$ value determined by the gas chromatography and operated by the computer, compared with the preestablished $H_2/C_2$ value in the form of analog display.

In this manner, by using the $H_2/C_2$ control loop, the $H_2/C_2$ concentrations in the gas phase 1b of the reactor 1 may be automatically controlled to the preestablished value, and in consequence, polyethylene having the predetermined M.I. may be continuously prepared. Therefore, the $H_2/C_2$ control loop is called the M.I. control loop since the $H_2/C_2$ control is substantially equal to the M.I. control.

In the introduction of the desired volume of monomer (ethylene) into the reactor 1 equipped with the gas phase part 1b, if there occurs an outer turbulence, for example, change in the activity of Ziegler catalyst introduced into the reactor 1 through the catalyst feed line 5, the partial pressure of the monomer (C₂) in the reactor 1 varies; the dissolved volume of the monomer in the solvent also varies, correlated to the variation of the partial pressure; and the dissolved monomer flows out of the system as the unreacted monomer together with the solvent. In other words, the polymerization rate varies even when the monomer feed volume is kept constant.

Heretofore, if such outer turbulence occurs, the partial pressure of monomer (C₂) alone varies and this results in the variation of the $H_2/C_2$ value and of M.I. value. However, in the present invention, as the $H_2/C_2$ value is controlled automatically with the hydrogen feed valve 2a and the vent valve 6a as described above, the M.I. may be kept constant even when such outer turbulence occurs. However, if such polymerization conditions as mentioned above is maintained, the polymerization rate will deviate from the preestablished rate. Thus, in the present invention, the polymerization rate may be restored to the preestablished rate by controlling the catalyst feed volume to compensate the variation of catalyst activity, thereby returning the partial pressure of monomer (C₂) to the original value.

The control loop for C₂ partial pressure will be explained hereinafter. The output voltage signal (1—5 V) generated from the pressure transmitter 30 at the pressure $P_0$ of the reactor 1 and the output signal $Y_2$ representing the ethylene mole % generated from the linearizing plot 36 are applied to the operating plot 40 and the operation of $(P_0+1.03)Y_2$ is performed. In the equation, the part in the parentheses meeds the conversion to absolute pressure, wherein 1.03 represents atmospheric pressure. In case an absolute pressure gauge in the pressure transmitter 30 of the reactor 1 is used, the value 1.03 in the parentheses of the equation becomes unnessary. The output signal generated from the operating plot 40 is recorded on the multipoint recorder 12 through the D/A converter 34 and used as the running indicator for the C₂ partial pressure. On the other hand, the $C_2$ partial pressure signal is applied to the PID controller 43 in the same way as in the $H_2/C_2$ control loop mentioned above, and PID controlled so as to coincide with the preestablished standard value for the $C_2$ partial pressure $p$ in the reactor given by an operator with the data entry panel 44 or with the partial pressure analog indicator 50 of the analog display apparatus 48. The output signal therefor (4—20 mA) is applied to the current/air pressure converter 52 through the D/A converter 34 and converted to the operation signal for the stroke control unit 4a' of the catalyst feed pump 4a'' in the form of air signal. In this manner, control of the $H_2/C_2$ concentrations at the predetermined value and the regulation of the $C_2$ partial pressure at the predetermined value when an outer turbulence like variation of catalyst activity occurs may be attained at the same time. Further, properties of polyolefins when prepared with other olefins may be controlled by the similar operations as mentioned above.

Lastly, as mentioned in hereinbefore description, it is sometimes required to produce polyolefins having predetermined properties, in particular, the predetermined density by performing the polymerization, maintaining the ratio of monomer-A (for example, ethylene) and comonomer-B (for example, proplyene), or the ratio of monomer-A and comonomer-C (for example, 1-butene) constantly, depending on the properties or brands of polyolefins to be prepared. Control of the comonomer ratio may be achieved by using the same line-up as in the $H_2/C_2$ value control loop. Each signal corresponding to monomer-A, monomer-B, and monomer-C, generated from the gas chromatography 9 is represented, say, by $Y_2'$, $Y_3'$ and $Y_4'$, respectively. The signals $Y_3'$ and $Y_4'$ are applied to the D/A converter 34 by an change-over switch (not illustrated) in an alternative way. An example in which the signal $Y_3'$ is chosen will be explained hereinafter.

The signals $Y_2'$ and $Y_3'$ of monomers A and B are applied to the linearizing plots 36 and 37, and linearized therein. The output signals $Y_2$ and $Y_3$ are recorded on the recorder 12 through the D/A converter 34 and simultaneously applied to the operating plot 39. Operation of $Y_2/Y_3$ is performed in the operating plot 39 and the output therefrom is recorded on the recorder 12 through the D/A converter 34 and simultaneously applied to the controller 42. In the controller 42, the input signal is PID-controlled so as to coincide with the predetermined standard value $d$ for the comonomer ratio given by an operator with the data entry panel 44 or with the comonomer ratio analog indicator 51 of the analog display apparatus. The output signal therefor (4—20 mA) is controlled with the cascade type controller 54 through the D/A converter 34, and the feed volume of the comonomer is regulated by operating the comonomer feed valve 3a'.

In this manner, by controlling the concentrations of monomer and comonomer, the continuous process for preparation of polyolefins having the predetermined density may be performed.

In the embodiments described above, the feed volumes of olefin as monomer and of solvent are controlled automatically with the flow rate indication controllers 56 and 58 through the olefin feed valve 3a and the solvent feed valve 5a, respectively. As was the case in the process computer control mentioned above, the control may be performed either with the output from the computer 11 alone, or with combination of output control from the computer 11 and the flow rate indication controllers 56 and 58.

As explained above, the process for preparation of polyolefins according to the invention employs a technique to determine the components in the gas phase of the reactor, whereby the situation of the reaction system may be made clear, exactly. By measuring the gas phase and making response, for example, at 1 minute intervals with high speed gas chromatography (Figure 4), almost no huntings of the properties such as melt index and/or density are observed. Further, since the process of the present invention employs a computer control system, any unstability due to manual control depending on operator's intuition may be excluded, whereby, in combination with the measurement of the gas phase in the reactor and the use of a high speed gas chromatography, polyolefins having the uniform properties such as predetermined melt index and/or density may be obtained.

In Figure 2, the solid line A illustrates the relationship between the melt index and the polymerization period for the continuous preparation of polyethylene according to the invention; whereas the dotted line B illustrates the relationship between the melt index and the polymerization period when the control of the melt index is carried out by manual operation of the hydrogen feed valve, the ethylene feed valve or the like according to the melt index measured at every 4 hour intervals.

The polymerization period as abscissa in Figure 2 is reckoned not from the initial time of the polymerization but from the arbitrary time at the steady state in the process.

As shown in Figure 2, the process of the present invention makes it possible to produce quite steadily polyolefins having uniform melt index.

In Figure 6, the solid line C illustrates the relationship between the density and the polymerization period for the continuous preparation of polyethylene according to the invention; whereas the dotted line D illustrates the relationship between the density and the polymerization period when the control of the density is carried out by manual operation of the ethylene feed valve as a monomer and propylene feed valve as a comonomer or the like according to the density measured at every 12 hour intervals. The polymerization period as abscissa in Figure 6 is reckoned not from the initial time of the polymerization but from an arbitrary time at the steady state in the process. As shown in Figure 6, the process of the present invention makes it possible to produce quite steadily polyolefins having uniform density.

## Industrial applicability

As will be clear from the foregoing embodiments, the present invention provides a useful art to produce polyolefins having perdetermined properties, in particular predetermined melt index and/or density, and are suitable, therefore, to produce quite steadily polyolefins having uniform properties, inter alia, predetermined melt index and/or density in the process for preparing polyolefins by polymerizing an olefin in the presence of a Ziegler catalyst and hydrogen.

## Claims

1. A process for preparing a polyolefin having predetermined properties by polymerizing at least one olefin in the presence of a Ziegler catalyst and hydrogen in an inert aliphatic hydrocarbon solvent in a gas/liquid phase reactor having a continous gas phase space above the liquid phase which is characterized by:

a) introducing said catalyst, olefin and hydrogen into the reactor;

b) analysing olefin and hydrogen concentrations in the gas phase within the reactor by gas chromatography;

c) generating input signals representative of said detected concentrations;

d) comparing said input signals with preset values corresponding to said predetermined properties;

e) generating control signals as a function of deviations between said input signals and said preset values; and

f) controlling the feed rates of said hydrogen and said olefin responsive to said control signals.

2. A process for preparing a polyolefin as claimed in claim 1, wherein the polymerization of said olefin is carried out by a continuous polymerizing process.

3. A process for preparing a polyolefin as claimed in claim 1, wherein the temperature in said reactor is kept constant at which the concentrations of said olefins and/or hydrogen are controlled to produce an olefin having the predetermined melt index.

4. A process for preparing a polyolefin as claimed in claim 1, wherein said gas chromatography is so regulated that the period required to detect said olefins is not more than 10 minutes.

5. A process for preparing a polyolefin as claimed in claim 1, wherein said olefin is ethylene or a mixture of ethylene and an α-olefin and/or a diolefin which are not more than 30 mole % to said ethylene.

6. A process for preparing a polyolefin having a predetermined melt index by polymerizing at least one olefin in the presence of a Ziegler catalyst and hydrogen in an inert aliphatic hydrocarbon solvent in a gas/liquid phase reactor having a continuous gas phase space above the liquid phase which is characterized by:

a) introducing said catalyst, olefin and hydrogen into the reactor;

analysing olefin and hydrogen concentrations in the gas phase within the reactor by gas chromatography,

applying input signals derived from the detected concentrations to a computer;

controlling the feed volumes of hydrogen and optionally catalyst into said reactor as well as pressure inside said reactor by means of an operation control output performed by comparing said input signals with the preset value corresponding to said melt index, and controlling the concentrations of said olefin and hydrogen to prepare a polyolefin having said melt index.

7. Process for preparing a polyolefin as claimed in claim 6, wherein the polymerization of said olefin is carried out by a continuous polymerizing process.

8. A process for preparing a polyolefin as claimed in claim 6, wherein the temperature in said reactor is kept constant at which the concentrations of said olefin and hydrogens are controlled to produced a polyolefin having the predetermined melt index.

9. A process for preparing a polyolefin as claimed in claim 6, wherein said gas chromatography is so regulated that the period required to detect said olefin is not more than 10 minutes.

10. A process for preparing a polyolefin as claim in claim 6, wherein said olefin is ethylene or a mixture of ethylene and α-olefin and/or a diolefin which are not more than 30 mole % to said ethylene.

11. A process for preparing a polyolefin having predetermined density by polymerizing not less than two kinds of olefins in the presence of a Ziegler catalyst and hydrogen in an inert aliphatic hydrocarbon solvent in a gas/liquid phase reactor having a continuous gas phase space above the liquid phase which is characterized by:

introducing said catalyst, olefin and hydrogen into the reactor;

analysing olefin and hydrogen concentrations in the phase within the reactor by gas chromatography;

applying input signals derived from the detected concentrations to a computer;

controlling the feed volumes of said olefins to said reactor by means of an operation control output performed by comparing said signals with the preset value corresponding to said density, and;

controlling the feed volumes of said olefins to prepare a polyolefin having said density.

12. A process for preparing a polyolefin as claimed in claim 11, wherein the polymerization of said olefins is carried out by a continuous polymerizing process.

13. A process for preparing a polyolefin as claimed in claim 11, wherein the temperature in said reactor is kept constant at which the concentrations of said olefins are controlled to produce a polyolefin having the predetermined density.

14. A process for preparing a polyolefin as claimed in claim 11, wherein said gas chromatography is so regulated that the period required to detect said olefins is not more than 10 minutes.

15. A process for preparing a polyolefin as claimed in claim 11, wherein said olefin is mixture of ethylene and an α-olefin and/or a diolefin which are not more then 30 mole % to said ethylene.

## Patentansprüche

1. Verfahren zur Herstellung eines Polyolefins mit vorbestimmten Eigenschaften durch Polymerisation mindestens eines Olefins in Gegenwart eines Ziegler-Katalysators und Wasserstoff in einem inerten aliphatischen Kohlenwasserstoff-Lösemittel in einem Gas/Flüssig-Phasen-Reaktor mit einem kontinuierlichen Gasphasenraum oberhalb der Flüssigphase, dadurch gekennzeichnet, daß

a) der genannte Katalysator, das Olefin und Wasserstoff in den Reaktor eingeführt,

b) die Olefin- und Wasserstoffkonzentrationen in der Gasphase in dem Reaktor durch Gaschromatographie bestimmt,

c) den genannten gemessenen Konzentrationen entsprechende Eingangssignale erzeugt,

d) die genannten Eingangssignale mit vorbestimmten Werten entsprechend den genannten vorbestimmten Eigenschaften verglichen,

e) Regelsignale als Funktion von Abweichungen zwischen den genannten Eingangssignalen und den genannten, vorbestimmten Werten erzeugt, und

f) die Zufuhrrate des Wasserstoffs und des genannten Olefins entsprechende den genannten Regelsignalen geregelt werden.

2. Verfahren zur Herstellung eines Polyolefins nach Anspruch 1, dadurch gekennzeichnet, daß man die Polymerisation des genannten Olefins in einem kontinuierlichen Polymerisationsverfahren durchführt.

3. Verfahren zur Herstellung eines Polyolefins nach Anspruch 1, dadurch gekennzeichnet, daß man die Temperatur in dem genannten Reaktor, bei der die Konzentrationen der genannten Olefin und/oder Wasserstoff zur Bildung eines Olefins mit einem vorbestimmten Schmelzindex geregelt werden, konstant hält.

4. Verfahren zur Herstellung eines Polyolefins nach Anspruch 1, dadurch gekennzeichnet, daß man die Gaschromatographie so einstellt, daß die zur Bestimmung der Olefine erforderliche Zeitspanne nicht mehr als zehn Minuten beträgt.

5. Verfahren zur Herstellung eines Polyolefins nach Anspruch 1, dadurch gekennzeichnet, daß das Olefin Ethylen oder ein Gemisch von Ethylen und einem α-Olefin und/oder einem Diolefin in einer Menge von nicht mehr als 30 Mol-% zu dem Ethylen ist.

6. Verfahren zur Herstellung eines Polyolefins mit einem vorbestimmten Schmelzindex durch Polymerisation mindestens eines Olefins in Gegenwart eines Ziegler-Katalysators und Wasserstoff in einem inerten aliphatischen Kohlenwasserstoff-Lösemittel in einem Gas/Flüssig-Phasen-Reaktor mit einem kontinuierlichen Gasphasenraum oberhalb der Flüssigphase, dadurch gekennzeichnet, daß

a) der Katalysator, das Olefin und Wasserstoff in den Reaktor eingeführt,

die Olefin- und Wasserstoffkonzentrationen in dem Reaktor durch Gaschromatographie bestimmt,

die von den bestimmten Konzentrationen abgeleiteten Eingangssignale in einen Computer eingegeben,

das Zufuhrvolumen von Wasserstoff und gegebenenfalls des Katalysators in den Reaktor sowie der Druck in dem Reaktor mittels einer Betriebsregelungs-Ausgangsgröße, erhalten durch Vergleich des genannten Eingangssignals mit dem vorbestimmten, dem genannten Schmelzindex entsprechenden Wert, geregelt und die Konzentrationen des Olefins und von Wasserstoff zur Herstellung eines Polyolefins mit dem genannten Schmelzindex geregelt werden.

7. Verfahren zur Herstellung eines Polyolefins nach Anspruch 6, dadurch gekennzeichnet, daß die Polymerisation des Olefins mittels eines kontinuierlichen Polymerisationsverfahrens durchgeführt wird.

8. Verfahren zur Herstellung eines Polyolefins nach Anspruch 6, dadurch gekennzeichnet, daß die Temperatur in dem Reaktor, bei der die Konzentrationen des genannten Olefins und von Wasserstoff zur Herstellung eines Polyolefins mit einem vorbestimmten Schmelzindex konstant gehalten wird.

9. Verfahren zur Herstellung eines Polyolefins nach Anspruch 6, dadurch gekennzeichnet, daß die Gaschromatographie so eingestellt wird, daß die zur Bestimmung des genannten Olefins erforderliche Zeitspanne nicht mehr als zehn Minuten beträgt.

10. Verfahren zur Herstellung eines Polyolefins nach Anspruch 6, dadurch gekennzeichnet, daß das Polyolefin Ethylen oder ein Gemisch von Ethylen und einem α-Olefin und/oder einem Diolefin in Anteilen von nicht mehr als 30 Mol-% zu dem genannten Ethylen ist.

11. Verfahren zur Herstellung eines Polyolefins mit vorbestimmter Dichte durch Polymerisation von nicht weniger als zwei Arten von Olefinen in Gegenwart eines Ziegler-Katalysators und Wasserstoff in einem inerten aliphatischen Kohlenwasserstoff-Lösemittel in einem Gas/Flüssig-Phasen-Reaktor mit einem kontinuierlichen Gasphasenraum oberhalb der Flüssigphase, dadurch gekennzeichnet, daß

der genannte Katalystator, Olefin und Wasserstoff in den Reaktor eingegeben,

die Olefin- und Wasserstoffkonzentrationen in der Gasphase in dem Reaktor durch Gaschromatographie bestimmt,

die von den bestimmten Konzentrationen abgeleiteten Eingangssignale in einen Computer eingegeben;

das Zufuhrvolumen der genannten Olefine in den Reaktor mittels einer Betriebsregelungs-Ausgangsgröße, erhalten durch Vergleich der Signale mit dem vorbestimmten, der genannten Dichte entsprechenden Wert, regelt und

das Zufuhrvolumen der genannten Olefine zur Herstellung eines Polyolefins mit der genannten Dichte regelt.

12. Verfahren zur Herstellung eines Polyolefins nach Anspruch 11, dadurch gekennzeichnet, daß die Polymerisation der genannten Olefine in einem kontinuierlichen Polymerisationsverfahren durchgeführt wird.

13. Verfahren zur Herstellung eines Polyolefins nach Anspruch 11, dadurch gekennzeichnet, daß die Temperatur in dem Reaktor, bei der die Konzentrationen der genannten Olefine zur Bildung eines Polyolefins mit der vorbestimmten Dichte geregelt wird, konstant gehalten wird.

14. Verfahren zur Herstellung eines Polyolefins nach Anspruch 11, dadurch gekennzeichnet, daß die Gaschromatographie so eingestellt wird, daß die zur Bestimmung der genannten Olefine erforderliche Zeitspanne nicht mehr als zehn Minuten beträgt.

15. Verfahren zur Herstellung eines Polyolefins nach Anspruch 11, dadurch gekennzeichnet, daß das Polyolefin ein Gemisch von Ethylen und einem α-Olefin und/oder einem Diolefin in einer Menge von nicht mehr als 30 Mol-% zu dem genannten Olefin ist.

**Revendications**

1. Procédé pour la préparation d'une polyoléfine ayant des propriétés prédéterminées, par polymérisation d'au moins une oléfine en présence d'un catalyseur de Ziegler et d'hydrogène, dans un solvant d'hydrocarbure aliphatique, dans un réacteur à phase gaz/liquide présentant un espace continu de phase gazeuse au-dessus de la phase liquide, caractérisé par les opérations consistant à:

a) introduire le catalyseur, l'oléfine et l'hydrogène dans le réacteur,

b) analyser les concentrations d'oléfine et d'hydrogène dans la phase gazeuse à l'intérieur du réacteur par chromatographie en phase gazeuse,

c) engendrer des signaux d'entrée représentatifs des concentrations ainsi détectées,

d) comparer ces signaux d'entrée avec des valeurs pré-établies correspondant auxdites propriétés prédéterminées,

e) engendrer des signaux de commande en fonction des écarts entre lesdits signaux d'entrée et lesdites valeurs pré-établies et

f) régler les débits d'alimentation en hydrogène et en oléfine en réponse à ces signaux de commande.

2. Procédé de préparation d'une polyoléfine selon la revendication 1, dans lequel la polymérisation de l'oléfine est effectuée par un procédé de polymérisation en continu.

3. Procédé de préparation d'une polyoléfine selon la revendication 1, dans lequel la température dans le réacteur est maintenue constante et les concentrations des oléfines et/ou de l'hydrogène sont réglées de façon à produire à cette température une polyoléfine ayant l'indice de fusion prédéterminé.

4. Procédé de préparation d'une polyoléfine selon la revendication 1, dans lequel la chromatographie en phase gazeuse est réglée de telle manière que la période requise pour la détection des oléfines ne dépasse pas 10 mn.

5. Procédé préparation d'une polyoléfine selon la revendication 1, dans lequel ladite oléfine est l'éthylène ou un mélange d'éthylène et d'une α-oléfine et/ou d'une dioléfine dans une proportion ne dépassant pas 30 mol % par rapport à l'éthylène.

6. Procédé de préparation d'une polyoléfine ayant un indice de fusion prédéterminé, par polymérisation d'au moins une oléfine en présence d'un catalyseur de Ziegler et d'hydrogène, dans un solvant d'hydrocarbure aliphatique, dans un réacteur à phase gaz/liquide présentant un espace continu de phase gazeuse au-dessus de la phase liquide, caractérisé par les opérations consistant à introduire le catalyseur, l'oléfine et l'hydrogène dans le réacteur, à analyser les concentrations d'oléfine et d'hydrogène dans la phase gazeuse à l'intérieur du réacteur par chromatographie en phase gazeuse, à appliquer à un ordinateur des signaux d'entrée résultant des concentrations détectées, à régler les volumes d'alimentation du réacteur en hydrogène et éventuellement en catalyseur, ainsi que la pression à l'intérieur du réacteur, au moyen d'un signal de sortie de commande d'opération, obtenu par comparaison desdits signaux d'entrée avec la valeur pré-établie correspondant audit indice de fusion, et à régler les concentrations d'oléfine et d'hydrogène de manière à préparer une polyoléfine ayant ledit indice de fusion.

7. Procédé de préparation d'une polyoléfiné selon la revendication 6, dans lequel la polymérisation de l'oléfine est effectuée par un procédé de polymérisation en continu.

8. Procédé de préparation d'une polyoléfine selon la revendication 6, dans lequel la température dans le réacteur est maintenue constante et les concentrations de l'oléfine et/ou de l'hydrogène sont réglées de façon à produire à cette température une polyoléfine ayant l'indice de fusion prédéterminé.

9. Procédé de préparation d'une polyoléfine selon la revendication 6, dans lequel la chromatographie en phase gazeuse est réglée de telle manière que la période requise pour la détection de l'oléfine ne dépasse pas 10 mn.

10. Procédé de préparation d'une polyoléfine selon la revendication 6, dans lequel ladite oléfine est l'éthyléne ou un mélange d'éthylène et d'une α-oléfine et/ou d'une dioléfine dans une proportion ne dépassant pas 30 mol % par rapport à l'éthylène.

11. Procédé pour la préparation d'une polyoléfine ayant une densité prédéterminée, par polymérisation d'au moins deux sortes d'oléfines en présence d'un catalyseur de Ziegler et d'hydrogène, dans un solvant inerte d'hydrocarbure aliphatique, dans un réacteur à phase gaz/liquide présentant un espace continu de phase gazeuse au-dessus de la phase liquide, caractérisé par les opérations consistant à introduire le catalyseur, les oléfines et l'hydrogène dans le réacteur, à analyser les concentrations d'oléfines et d'hydrogène dans la phase gazeuse à l'intérieur du réacteur par chromatographie en phase gazeuse, à appliquer à un ordinateur des signaux d'entrée résultant des concentrations détectées, à régler les volumes d'alimentation du réacteur en oléfines au moyen d'un signal de sortie de commande d'opération, obtenu par comparaison desdits signaux d'entrée avec la valeur pré-établie correspondant à ladite densité, et à régler les volumes d'alimentation en oléfines de manière à préparer un polyoléfine ayant ladite densité.

12. Procédé de préparation d'une polyoléfine selon la revendication 11, dans lequel la polymérisation des oléfines est effectuée par un procédé de polymérisation en continu.

13. Procédé de préparation d'une polyoléfine selon la revendication 11, dans lequel la température dans le réacteur est maintenue constante et les concentrations des oléfinés sont réglées de façon à produire, à cette température, une polyoléfine ayant la densité prédéterminée.

14. Procédé de préparation d'une polyoléfine selon la revendication 11, dans lequel la chromatographie en phase gazeuse est réglée de telle manière que la période requise pour la détection des oléfines ne dépasse pas 10 mn.

15. Procédé de préparation d'une polyoléfine selon la revendication 11, dans lequel ladite oléfine est un mélange d'éthylène et d'une α-oléfine et/ou d'une dioléfine dans une proportion ne dépassant pas 30 mol % par rapport à l'éthylène.

# FIG. 1

FIG. 2

RANGE OF STANDARD

M.I.

TIME ( hrs. )

0 027 474

FIG.3a

FIG. 3b

0 027 474

# FIG. 4

RESPONSE OF DETECTOR

H₂  C₂H₆  C₂H₄  CH₄

TIME (Sec.)

0    10    20    30    40    50    60

# FIG. 5

DEGREE OF OPENING OF VENT VALVE (%)

DEGREE OF OPENING OF HYDROGEN FEED VALVE (%)

100    50

100    50

0.2    0.6    1.0

SIGNAL AIR PRESSURE (Kg/cm²G)

5

FIG. 6